# EUROPEAN PATENT APPLICATION

(11) **EP 2 762 504 A1**
(43) Date of publication of application: **06.08.2014**
(21) Application number: 12835200.2
(22) Date of filing: 06.07.2012
(51) Int. Cl.: C08F 259/08, C09K 3/18

(54) **WATER-REPELLENT AND OIL-REPELLENT COMPOSITION**

(30) Priority: 30.09.2011 JP 2011215830
(71) Applicant: Daikin Industries, Ltd., Osaka 530-8323 (JP)
(72) Inventor: MINAMI, Shinichi, Osaka-shi, Osaka 530-8323 (JP); NAKAMURA, Hisako, Osaka-shi, Osaka 530-8323 (JP); FUKUMORI, Masaki, Osaka-shi, Osaka 530-8323 (JP); ENOMOTO, Takashi, Osaka-shi, Osaka 530-8323 (JP); YAMAMOTO, Ikuo, Osaka-shi, Osaka 530-8323 (JP)
(74) Representative: HOFFMANN EITLE
(86) International application number: PCT/JP2012/067391
(87) International publication number: WO 2013/046851

(57) **Abstract**

Disclosed is a fluorine-containing polymer comprising a first polymer formed from first monomers, and a second polymer formed from second monomers, the second monomers being polymerized in the presence of the first polymer, the first monomers and/or the second monomers containing a fluorine-containing monomer (a), and the second monomers containing a halogenated olefin monomer (b). The fluorine-containing polymer imparts excellent water- and oil-repellency to base materials for fiber products and the like, and provides a water-repellent and oil-repellent composition superior at preventing polymer adhesion to rolls during processing.

## Description

### TECHNICAL FIELD

The present invention relates to a fluorine-containing polymer and a treatment composition, particularly a surface treatment composition comprising the polymer, which imparts excellent water repellency, oil repellency and soil resistance to a textile (for example, a carpet), a paper, a non-woven fabric, masonry, an electrostatic filter, a dust protective mask, and a part of fuel cell.

### BACKGROUND ART

Hitherto, various fluorine-containing compounds have been proposed. The fluorine-containing compounds have the advantageous effects of having properties excellent in heat resistance, oxidation resistance, weather resistance and the like. The fluorine-containing compounds are used as, for example, a water- and oil-repellent agent and a soil resistant agent by utilizing the properties that the fluorine-containing compounds have low free energy, i.e., difficulty in adherence. For example, U.S. Patent No. 5247008 discloses a finishing agent for textile, leather, paper and mineral substance, wherein said agent comprises an aqueous dispersion of a copolymer of a perfluoroalkyl ester of an acrylic acid or methacrylic acid, an alkyl ester of an acrylic acid or methacrylic acid and an aminoalkyl ester of an acrylic acid or methacrylic acid.

Moreover, conventionally in order to improve durability of the water- and oil-repellency to wash, dry cleaning, etc., it is attempted that a monomer containing an adhesive group is copolymerized with a polymerizable monomer containing a fluoroalkyl group, or a polymer having a high film strength is blended with a polymer containing a fluoroalkyl group. In the field of a paint (a coating agent), the use of a particulate polymer having multilayer structure has succeeded in maintaining the properties of fluorine and giving new properties of workability (for example, JP-06-56944A).

Moreover, in order to give properties such as durability and low-temperature cure properties, a composition comprising a particulate polymer having a multilayer structure is proposed (for example, JP-02-001795A, JP-07-278422A, JP-11-172126A and JP-2007-291373A).

A treatment bath of a water- and oil-repellent agent prepared by diluting a conventional general water dispersion liquid often gives troubles, such as a roll soil resulting in a fabric soil, wherein a dispersion liquid breaks by a mechanical impact received when a fabric to be treated enters, emulsion particles are aggregated and sedimentated and then the polymer adheres to a repellent roll. Although some methods excellent in stability of impurity are proposed (for example, JP-09-118877A and WO 2004/069924A), these methods cannot always give sufficiently satisfactory stability in connection with diversity of water- and oil-repellent treatment in recent years. As to the problem of adhesion of the polymer to the roll, the more the tackiness of polymer is, the more easily the problem arises. When the carbon number of the fluoroalkyl group in a fluoroalkyl group-containing polymer is 6 or less, there is the tendency that, since the polymer has lower melting point, the polymer has higher tackiness than the polymer having the carbon number of at least 8.

### PRIOR ART DOCUMENTS

Patent Document 1: USP No. 5247008
Patent Document 2: JP-06-56944A
Patent Document 3: JP-02-001795A
Patent Document 4: JP-07-278422A
Patent Document 5: JP-11-172126A
Patent Document 6: JP-2007-291373A
Patent Document 7: JP-09-118877A
Patent Document 8: WO 2004/069924A

### DISCLOSURE OF THE INVENTION

### Problems to be Solved by the Invention

A purpose of the present invention is to provide a water- and oil-repellent composition which can impart excellent water- and oil-repellency to substrates, such as textiles, and which has excellent prevention of the polymer adhesion to a roll in a processing treatment using the composition.

### Means for Solving the Problems

The inventors intensively studied for the purpose of providing a water- and oil-repellent composition which suppresses the preparation of a highly adhesive polymer portion, exhibits high water- and oil-repellency, and is excellent also in durability, in order to solve the above-mentioned problems. As a result, by differing a polymerization initiation time between a polymer comprising a polymer unit having a specified chemical structure, and a polymer having a polymer unit formed from a monomer containing a fluoroalkyl group, the inventors discovered that the above-mentioned objects can be achieved to complete the present invention.

The present invention provides a fluorine-containing polymer comprising a first polymer formed from a first monomer, and a second polymer formed from a second monomer,
wherein the second monomer is polymerized in the presence of the first polymer,
at least one of the first monomer and the second monomer comprises a fluorine-containing monomer (a), and
the second monomer comprises a halogenated olefin monomer (b).

The present invention provides also a method of producing a fluorine-containing polymer comprising a first polymer formed from a first monomer, and a second polymer formed from a second monomer,
wherein the method comprises the steps of:
(I) polymerizing the first monomer to obtain the first polymer, and
(II) polymerizing the second monomer in the presence of the first polymer to obtain the second polymer,
   at least one of the first monomer and the second monomer comprises a fluorine-containing monomer,
   the first monomer comprises a fluorine-free non-crosslinkable monomer, and
   the second monomer comprises a halogenated olefin monomer.

In the present invention, the first monomer may comprise or may not comprise the halogenated olefin monomer. Preferably, the first monomer does not comprise the halogenation olefin monomer.

In a preferable embodiment, the present invention provides the fluorine-containing polymer comprising a first polymer formed from a first monomer, and a second polymer formed from a second monomer,
wherein the second monomer is polymerized in the presence of the first polymer,
at least one of the first monomer and the second monomer comprises a fluorine-containing monomer (a),
the first monomer does not comprise a halogenated olefin monomer (b), and
the second monomer comprises the halogenated olefin monomer (b).

In a preferable embodiment, the present invention provides also a method of producing the fluorine-containing polymer comprising a first polymer formed from a first monomer, and a second polymer formed from a second monomer,
wherein the method comprises the steps of:
(I) polymerizing the first monomer to obtain the first polymer, and
(II) polymerizing the second monomer in the presence of the first polymer to obtain the second polymer,
   at least one of the first monomer and the second monomer comprises a fluorine-containing monomer,
   the first monomer comprises a fluorine-free non-crosslinkable monomer and does not comprise a halogenated olefin monomer, and
   the second monomer comprises the halogenated olefin monomer.

Furthermore, the present invention provides a water-and oil-repellent agent which comprises the above-mentioned fluorine-containing polymer as an essential ingredient.

The fluorine-containing polymer has repeating units derived from a fluorine-containing monomer, and the repeating units derived from a fluorine-free monomer such as a halogenated olefin.

The fluorine-containing polymer can be manufactured by a fractional charge. The fractional charge performs 2-stage polymerization of the monomers. The "fractional charge" means that, in delay to the charge (polymerization initiation) of at least one monomer, the charge (polymerization initiation) of at least one other monomer is conducted. The "2-stage polymerization" means that, in the presence of the first polymer obtained by polymerizing the first monomer comprising at least one monomer, the second monomer comprising at least one other monomer is polymerized.

### EFFECTS OF THE INVENTION

An effect of the present invention is to provide a water- and oil-repellent composition which can impart excellent water- and oil-repellency to substrates, such as textiles, and which has excellent prevention of the polymer adhesion to a roll in a processing treatment using the composition.

### DETAILED DESCRIPTION OF THE INVENTION

The fluorine-containing polymer of the present invention has repeating units derived from the first monomer, and repeating units derived from the second monomer. The first polymer and the second polymer may be copolymerized. That is, the first polymer may be chemically bonded to the second polymer. Alternatively, the first polymer and the second polymer may not form chemical bonds, but may be physically bonded together. Examples of the physical bond include a core/shell structure in which the first polymer forms a core and the second polymer forms a shell. In the core/shell structure, although the first polymer and the second polymer may not be chemically bonded together, these may be chemically bonded together.

In the present invention, the fluorine-containing monomer (a) and the halogenated olefin monomer (b) are used as the monomer. Optionally, a fluorine-free non-crosslinkable monomer (c) and/or a fluorine-free crosslinkable monomer (d) may be used.

At least one of the first monomer and the second monomers comprises the fluorine-containing monomer. Preferably, the first monomer comprises the fluorine-containing monomer and the second monomer does not comprise the fluorine-containing monomer.

The second monomer comprises a halogenated olefin monomer. The second monomer may consist of only the halogenated olefin monomer.

The first monomer may comprise the fluorine-free non-crosslinkable monomer. Preferably, the second monomer does not comprise a fluorine-free non-crosslinkable monomer. When the second monomer does not comprise the fluorine-free non-crosslinkable monomer, in the processing treatment of the treatment agent comprising the fluorine-containing polymer, the performance of preventing a roll dirt caused by a polymer adhesion to a roll is excellent.

At least one of the first monomer and the second monomers may comprise the fluorine-free crosslinkable monomer. When the fluorine-containing polymer comprises the fluorine-free crosslinkable monomer, the first monomer may not comprise the fluorine-free crosslinkable monomer, and the second monomer may comprise the fluorine-free crosslinkable monomer; or the first monomer may comprise the fluorine-free crosslinkable monomer, and the second monomer may not comprise the fluorine-free crosslinkable monomer.

Preferable types of monomers for the first monomer and the second monomer have the following embodiments.

**Table 1**

| Embodiment | First monomer | Second monomer |
|---|---|---|
| 1 | Fluorine-containing Monomer | Halogenated Olefin Monomer |
| 2 | Fluorine-containing Monomer, Fluorine-free Non-crosslinkable Monomer | Halogenated Olefin Monomer |
| 3 | Fluorine-free Non-crosslinkable Monomer | Halogenated Olefin Monomer, Fluorine-containing Monomer |
| 4 | Fluorine-containing Monomer | Halogenated Olefin Monomer, Fluorine-free Crosslinkable Monomer |
| 5 | Fluorine-free Non-crosslinkable Monomer | Halogenated Olefin Monomer, Fluorine-containing Monomer, Fluorine-free Crosslinkable Monomer |
| 6 | Fluorine-containing Monomer, Fluorine-free Non-crosslinkable Monomer | Halogenated Olefin Monomer, Fluorine-free Crosslinkable Monomer |
| 7 | Fluorine-containing Monomer, Fluorine-free Non-crosslinkable Monomer, Fluorine-free Crosslinkable Monomer | Halogenated Olefin Monomer |
| 8 | Fluorine-containing Monomer, Fluorine-free Non-crosslinkable Monomer, Halogenated Olefin Monomer | Halogenated Olefin Monomer |
| 9 | Fluorine-containing Monomer, Fluorine-free Non-crosslinkable Monomer, Fluorine-free Crosslinkable Monomer, Halogenated Olefin Monomer | Halogenated Olefin Monomer |

The halogenated olefin monomer may be present in both of the first monomer and the second monomer (for example, embodiments 8 and 9).

In the present invention, Embodiment 2 (first monomer is the fluorine-containing monomer and the fluorine-free non-crosslinkable monomer, and the second monomer is the halogenated olefin monomer) is especially preferable.

Also preferable is an embodiment in which each of the fluorine-containing monomer and the fluorine-free crosslinkable monomer is present in both of the first monomer and the second monomer. That is, also preferable are the embodiments, which are the same as Embodiments 1-9 except that the fluorine-containing monomer is present in both of the first monomer and the second monomer, and the embodiments, which are the same as Embodiments 1-9 except that the fluorine-free crosslinkable monomer is present in both of the first monomer and the second monomer.

### (a) Fluorine-Containing Monomer

The fluorine-containing monomer may be represented by the formula:

CH₂=C(-X)-C(=O)-Y-Z-Rf

wherein
X is a hydrogen atom, a monovalent organic group or a halogen atom;
Y is -0- or -NH-;
Z is a direct bond or divalent organic group;
Rf is a fluoroalkyl group having 1 to 20 carbon atoms.

Z may be, for example, a linear alkylene group or branched alkylene group having 1 to 20 carbon atoms, such as a group represented by the formula -(CH₂)ₓ- wherein x is from 1 to 10 or a group represented by the formula -SO₂N(R¹)R²- or by the formula -CON(R¹)R²- wherein R¹ is an alkyl group having 1 to 10 carbon atoms and R² is a linear alkylene group or branched alkylene group having 1 to 10 carbon atoms or by the formula -CH₂CH(OR³)CH₂- wherein R³ is a hydrogen atom or an acyl group having 1 to 10 carbon atoms (for example, formyl group or acetyl group) or by the formula -Ar-CH₂- wherein Ar is an arylene group optionally having a substituent group, or by the formula - (CH²)ₘ-SO₂-(CH₂)ₙ- group or - (CH₂)ₘ-S-(CH₂)ₙ- group wherein m is 1-10, n is 0-10.

Specific examples of X are H, Me (methyl group), Cl, Br, I, F, CN and CF₃.

The fluorine-containing monomer (A) is preferably an acrylate ester or acrylamide represented by the formula:

CH₂=C(-X)-C(=O)-Y-Z-Rf (1)

wherein
X is a hydrogen atom, a linear or branched alkyl group having 1 to 21 carbon atoms, a fluorine atom, a chlorine atom, a bromine atom, an iodine atom, a CFX¹X² group (where each of X¹ and X² is a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group or a substituted or unsubstituted phenyl group;
Y is -O- or -NH- group;
Z is an aliphatic group having 1 to 10 carbon atoms, an aromatic or cycloaliphatic group having 6 to 18 carbon atoms, a -CH₂CH₂N(R¹)SO₂- group (wherein R¹ is an alkyl group having 1 to 4 carbon atoms), a -CH₂CH(OZ¹) CH₂- group (wherein Z¹ is a hydrogen atom or an acetyl group), a - (CH₂)ₘ-SO₂-(CH₂)ₙ-group or a -(CH₂)ₘ-S-(CH₂)ₙ- group (wherein m is 1 to 10 and n is 0 to 10),
Rf is a linear or branched fluoroalkyl group having 1 to 20 carbon atoms.

The fluorine-containing monomer (a) may be substituted with a halogen atom or the like at the alpha-position (of acrylate or methacrylate). Therefore, in the formula (1), X may be a linear or branched alkyl group having 2 to 21 carbon atoms, a fluorine atom, a chlorine atom, a bromine atom, an iodine atom, a CFX¹X² group (wherein X¹ and X² represent a hydrogen atom, a fluorine atom, a chlorine atom, a bromine atom or an iodine atom), a cyano group, a linear or branched fluoroalkyl group having 1 to 21 carbon atoms, a substituted or an unsubstituted benzyl group, or a substituted or an unsubstituted phenyl group.

In the formula (1), the Rf group is preferably a perfluoroalkyl group. The carbon number of the Rf group is preferably from 1 to 12, for example, 1 to 6, particularly from 4 to 6. Examples of the Rf group include -CF₃, -CF₂CF₃, -CF₂CF₂CF₃, -CF(CF₃)₂, -CF₂CF₂CF₂CF₃, -CF₂CF(CF₃)₂, -C(CF₃)₃,-(CF₂)₄CF₃, - (CF₂)₂CF(CF₃)₂, -CF₂C (CF₃)₃, -CF(CF₃)CF₂CF₂CF₃,-(CF₂)₅CF₃, - (CF₂)₃CF(CF₃)₂, -(CF₂)₄CF(CF₃)₂ and -C₈F₁₇.

Z is preferably an aliphatic group having 1 to 10 carbon atoms, an aromatic or cycloaliphatic group having 6 to 18 carbon atoms, -CH₂CH₂N (R¹) SO₂- group (wherein R¹ is an alkyl group having 1 to 4 carbon atoms) or -CH₂CH(OZ¹)CH₂-group (wherein Z¹ is a hydrogen atom or an acetyl group) or - (CH₂)ₘ-SO₂-(CH₂)ₙ- group or -(CH₂)ₘ-S-(CH₂)ₙ- group (wherein m is 1 to 10, n is 0 to 10). The aliphatic group is preferably an alkylene group (having particularly 1 to 4, for example, 1 or 2 carbon atoms). The aromatic group or the cyclic aliphatic group may be substituted or unsubstituted. The S group or the SO₂ group may directly bond to the Rf group.

Specific examples of the fluorine-containing monomer (a) include, but are not limited to, the following:

CH₂=C(-H)-C(=O)-O-(CH₂)₂-Rf

CH₂=C(-H)-C(=O)-O-C₆H₄-Rf

CH₂=C(-Cl) C(=O)-O-(CH₂)₂-Rf

CH₂=C(-H)-C(=O)-O-(CH₂)₂N(-CH₃)SO₂-Rf

CH₂=C(-H)-C(=O)-O-(CH₂)₂N(-C₂H₅)SO₂-Rf

CH₂=C(-H)-C(=O)-O-CH₂CH(-OH)CH₂-Rf

CH₂=C(-H)-C(=O)-O-CH₂CH(-OCOCH₃)CH₂-Rf

CH₂=C(-H)-C(=O)-O-(CH₂)₂-S-Rf

CH₂=C(-H)-C(=O)-O-(CH₂)₂-S-(CH₂)₂-Rf

CH₂=C(-H)-C(=O)-O-(CH₂)₃-SO₂-Rf

CH₂=C(-H)-C(=O)-O-(CH₂)₂-SO₂-(CH₂)₂ -Rf

CH₂=C(-H)-C(=O)-NH-(CH₂)₂-Rf

CH₂=C(-CH₃)-C(=O)-O-(CH₂)₂-S-Rf

CH₂=C(-CH₃)-C(=O)-O-(CH₂)₂-S-(CH₂)₂-Rf

CH₂=C(-CH₃)-C(=O)-O-(CH₂)₃-SO₂-Rf

CH₂=C(-CH₃)-C(=O)-O-(CH₂)₂-SO₂-(CH₂)₂-Rf

CH₂=C(-CH₃)-C(=O)-NH-(CH₂)₂-Rf

CH₂=C(-F)-C(=O)-O-(CH₂)₂-S-Rf

CH₂=C(-F)-C(=O)-O-(CH₂)₂-S-(CH₂)₂-Rf

CH₂=C(-F)-C(=O)-O-(CH₂)₂-SO₂-Rf

CH₂=C(-F)-C(=O)-O-(CH₂)₂-SO₂-(CH₂)₂-Rf

CH₂=C(-F)-C(=O)-NH-(CH₂)₂-Rf

CH₂=C(-Cl)-C(=O)-O-(CH₂)₂-S-Rf

CH₂=C(-Cl)-C(=O)-O-(CH₂)₂-S-(CH₂)₂-Rf

CH₂=C(-Cl)-C(=O)-O-(CH₂)₂-SO₂-Rf

CH₂=C(-Cl)-C(=O)-O-(CH₂)₂-SO₂-(CH₂)₂-Rf

CH₂=C(-Cl)-C(=O)-NH-(CH₂)₂-Rf

CH₂=C(-CF₃)-C(=O)-O-(CH₂)₂-S-Rf

CH₂=C(-CF₃)-C(=O)-O-(CH₂)₂-S-(CH₂)₂-Rf

CH₂=C(-CF₃)-C(=O)-O-(CH₂)₂-SO₂-Rf

CH₂=C(-CF₃)-C(=O)-O-(CH₂)₂-SO₂-(CH₂)₂-Rf

CH₂=C(-CF₃)-C(=O)-NH-(CH₂)₂-Rf

CH₂=C(-CF₂H)-C(=O)-O-(CH₂)₂-S-Rf

CH₂=C(-CF₂H)-C(=O)-O-(CH₂)₂-S-(CH₂)₂-Rf

CH₂=C(-CF₂H)-C(=O)-O-(CH₂)₂-SO₂-Rf

CH₂=C(-CF₂H)-C(=O)-O-(CH₂)₂-SO₂-(CH₂)₂-Rf

CH₂=C(-CF₂H)-C(=O)-NH-(CH₂)₂-Rf

CH₂=C(-CN)-C(=O)-O-(CH₂)₂-S-Rf

CH₂=C(-CN)-C(=O)-O-(CH₂)₂-S-(CH₂)₂-Rf

CH₂=C(-CN)-C(=O)-O-(CH₂)₂-SO₂-Rf

CH₂=C(-CN)-C(=O)-O-(CH₂)₂-SO₂-(CH₂)₂-Rf

CH₂=C(-CN)-C(=O)-NH-(CH₂)₂-Rf

CH₂=C(-CF₂CF₃)-C(=O)-O-(CH₂)₂-S-Rf

CH₂=C(-CF₂CF₃)-C(=O)-O-(CH₂)₂-S-(CH₂)₂-Rf

CH₂=C(-CF₂CF₃)-C(=O)-O-(CH₂)₂-SO₂-Rf

CH₂=C(-CF₂CF₃)-C(=O)-O-(CH₂)₂-SO₂-(CH₂)₂-Rf

CH₂=C(-CF₂CF₃)-C(=O)-NH-(CH₂)₂-Rf

CH₂=C(-F)-C(=O)-O-(CH₂)₃-S-Rf

CH₂=C(-F)-C(=O)-O-(CH₂)₃-S-(CH₂)₂-Rf

CH₂=C(-F)-C(=O)-O-(CH₂)₃-SO₂-Rf

CH₂=C(-F)-C(=O)-O-(CH₂)₃-SO₂-(CH₂)₂-Rf

CH₂=C(-F)-C(=O)-NH-(CH₂)₃-Rf

CH₂=C(-Cl)-C(=O)-O-(CH₂)₃-S-Rf

CH₂=C(-Cl)-C(=O)-O-(CH₂)₃-S-(CH₂)₂-Rf

CH₂=C(-Cl)-C(=O)-O-(CH₂)₃-SO₂-Rf

CH₂=C(-Cl)-C(=O)-O-(CH₂)₃-SO₂-(CH₂)₂-Rf

CH₂=C(-CF₃)-C(=O)-O-(CH₂)₃-S-Rf

CH₂=C(-CF₃)-C(=O)-O-(CH₂)₃-S-(CH₂)₂-Rf

CH₂=C(-CF₃)-C(=O)-O-(CH₂)₃-SO₂-Rf

CH₂=C(-CF₃)-C(=O)-O-(CH₂)₃-SO₂-(CH₂)₂-Rf

CH₂=C(-CF₂H)-C(=O)-O-(CH₂)₃-S-Rf

CH₂=C(-CF₂H)-C(=O)-O-(CH₂)₃-S-(CH₂)₂-Rf

CH₂=C(-CF₂H)-C(=O)-O-(CH₂)₃-SO₂-Rf

CH₂=C(-CF₂H)-C(=O)-O-(CH₂)₃-SO₂-(CH₂)₂-Rf

CH₂=C(-CN)-C(=O)-O-(CH₂)₃-S-Rf

CH₂=C(-CN)-C(=O)-O-(CH₂)₃-S-(CH₂)₂ -Rf

CH₂=C(-CN)-C(=O)-O-(CH₂)₃-SO₂-Rf

CH₂=C(-CN)-C(=O)-O-(CH₂)₃-SO₂-(CH₂)₂-Rf

CH₂=C(-CF₂CF₃)-C(=O)-O-(CH₂)₃-S-Rf

CH₂=C(-CF₂CF₃)-C(=O)-O-(CH₂)₃-S-(CH₂)₂-Rf

CH₂=C(-CF₂CF₃)-C(=O)-O- (CH₂)₃-SO₂-Rf

CH₂=C(-CF₂CF₄)-C(=O)-O-(CH₂)₂-SO₂-(CH₂)₂-Rf

wherein Rf is a fluoroalkyl group having 1 to 20 carbon atoms.

### (b) Halogenated olefin monomer

Preferably, the halogenated olefin monomer (b) is an olefin having 2-20 carbon atoms and substituted by 1-10 chlorine atoms, bromine atoms or iodine atoms. Preferably, the halogenated olefin monomer (b) is a chlorinated olefin having 2-20 carbon atoms, particularly an olefin having 2-5 carbon atoms carbon and having 1-5 chlorine atoms. Preferable examples of the halogenated olefin monomer (b) are a vinyl halide such as vinyl chloride, vinyl bromide and vinyl iodide, and a vinylidene halide such as vinylidene chloride, vinylidene bromide and vinylidene iodide.

### (c) Fluorine-free non-crosslinkable monomer

The fluorine-free non-crosslinkable monomer (c) is a monomer which does not contain a fluorine atom. The fluorine-free non-crosslinkable monomer (c) does not have a crosslinkable functional group. Unlike the crosslinkable monomer (d), the fluorine-free non-crosslinkable monomer (c) has no crosslinkability. Preferably, the fluorine-free non-crosslinkable monomer (c) is a fluorine-free monomer having a carbon-carbon double bond. The fluorine-free non-crosslinkable monomer (c) is preferably a vinyl monomer free from fluorine. Generally, the fluorine-free non-crosslinkable monomer (c) is a compound having one carbon-carbon double bond.

A preferable fluorine-free non-crosslinkable monomer (c) is represented by the formula:

CH₂=CA-T

wherein A is a hydrogen atom, a methyl group, or a halogen atom other than a fluorine atom (for example, a chlorine atom, a bromine atom, and an iodine atom),
T is a hydrogen atom, an open-chain or cyclic hydrocarbon group having 1-20 carbon atoms, or an open-chain or cyclic organic group having 1-20 carbon atoms and an ester bond.

Examples of the open-chain or cyclic hydrocarbon group having 1-20 carbon atoms are a linear or branched aliphatic hydrocarbon group having 1-20 carbon atoms, a cyclic aliphatic group having 4-20 carbon atoms, an aromatic hydrocarbon group having 6-20 carbon atoms, and an araliphatic hydrocarbon group having 7-20 carbon atoms.

Examples of the open-chain or cyclic organic group having 1-20 carbon atoms and an ester bond are:

-C(=O)-O-Q and -O-C(=O)-Q

wherein Q is a linear or branched aliphatic hydrocarbon group having 1-20 carbon atoms, a cyclic aliphatic group having 4-20 carbon atoms, an aromatic hydrocarbon group having 6-20 carbon atoms, or an araliphatic hydrocarbon group having 7-20 carbon atoms.

Preferable examples of the fluorine-free non-crosslinkable monomer (c) are, for example, ethylene, vinyl acetate, acrylonitrile, styrene, a poly(ethyleneglycol) (meth)acrylate, polypropyleneglycol (meth)acrylate, methoxypolyethyleneglycol (meth)acrylate, methexypolypropyleneglycol (meth)acrylate, and vinyl alkyl ether. The fluorine-free non-crosslinkable monomer (c) is not limited to these examples.

The fluorine-free non-crosslinkable monomer (c) may be (meth)acrylate ester having an alkyl group. The number of the carbon atoms in the alkyl group may be from 1 to 30, for example, from 6 to 30 (e.g., from 10 to 30). For example, the fluorine-free non-crosslinkable monomer (c) may be an acrylate of the general formula:

CH₂=CA¹COOA²

wherein A¹ is a hydrogen atom, a methyl group, or a halogen atom other than a fluorine atom (for example, a chlorine atom, a bromine atom, and an iodine atom), and
A² is an alkyl group represented by CₙH₂ₙ₊₁ (n= 1-30).

The fluorine-free non-crosslinkable monomer (c) may be (meth)acrylate may be a (meth)acrylate monomer having a cyclic hydrocarbon group. The (meth)acrylate monomer having a cyclic hydrocarbon group is a compound having (preferably monovalent) cyclic hydrocarbon group and monovalent (meth)acrylate group. The monovalent cyclic hydrocarbon group directly bonds to the monovalent (meth)acrylate group. Examples of the cyclic hydrocarbon group include a saturated or unsaturated, monocyclic group, polycyclic group or bridged ring group. The cyclic hydrocarbon group is preferably a saturated group. The cyclic hydrocarbon group preferably has from 4 to 20 carbon atoms. Examples of the cyclic hydrocarbon group include a cycloaliphatic group having 4 to 20 carbon atoms, particularly 5 to 12 carbon atoms, an aromatic group having 6 to 20 carbon atoms, and an araliphatic group having 7 to 20 carbon atoms. The number of carbon atoms in the cyclic hydrocarbon group is particularly preferably at most 15, for example, at most 10. A carbon atom in the cyclic hydrocarbon group preferably directly bonds to an ester group in the (meth)acrylate group. The cyclic hydrocarbon group is preferably a saturated cycloaliphatic group. Specific examples of the cyclic hydrocarbon group include a cyclohexyl group, a t-butyl cyclohexyl group, an isobornyl group, a dicyclopentanyl group and a dicyclopentenyl group. The (meth)acrylate group is an acrylate group or a methacrylate group, preferably a methacrylate group. Specific examples of the monomer having cyclic hydrocarbon group include cyclohexyl methacrylate, t-butylcyclohexyl methacrylate, benzyl methacrylate, isobornyl methacrylate, isobornyl acrylate, dicyclopentanyl methacrylate, dicyclopentanyl acrylate, and dicyclopentenyl acrylate.

### (d) Fluorine-free Crosslinkable Monomer

The fluorine-containing polymer of the present invention may have repeating units derived from the fluorine-free crosslinkable monomer (d). The fluorine-free crosslinkable monomer (d) is a monomer free from a fluorine atom. The fluorine-free crosslinkable monomer (d) has at least two reactive groups and/or carbon-carbon double bonds. The fluorine-free crosslinkable monomer (d) may be a compound which has at least two carbon-carbon double bonds or a compound which has at least one carbon-carbon double bond and at least one reactive group. Examples of the reactive group include a hydroxyl group, an epoxy group, a chloromethyl group, a blocked isocyanate group, an amino group and a carboxyl group. The fluorine-free crosslinkable monomer (d) may be a mono (meth) acrylate, (meth)diacrylate, or mono(meth)acrylamide having a reactive group. Alternatively, the fluorine-free crosslinkable monomer (d) may be di(meth)acrylate.

Examples of the crosslinkable monomer (d) include, but are not limited to, diacetone(meth)acrylamide, (meth)acrylamide, N-methylol(meth)acrylamide, hydroxymethyl (meth)acrylate, hydroxyethyl (meth)acrylate, 3-chloro-2-hydroxypropyl (meth)acrylate, 2-acetoacetoxyethyl (meth)acrylate, butadiene, isoprene, chloroprene, glycidyl (meth)acrylate, 1,6-hexanediol di(meth)acrylate, and neopentylglycol di(meth)acrylate.

The term "(meth)acrylate" as used herein means an acrylate or methacrylate, and the term "(meth)acrylamide" as used herein means an acrylamide or methacrylamide.

When the fluorine-free non-crosslinkable monomer (c) and/or the fluorine-free crosslinkable monomer (d) are copolymerized, various properties such as water- and oil-repellency, stain-proofing properties, cleaning durability and washing durability of said properties, solubility in solvents, hardness and feeling may be improved depending on the necessity.

In the fluorine-containing polymer, the amount of the halogenated olefin monomer (b) may be from 2 to 500 parts by weight, for example, from 5 to 200 parts by weight, especially from 20 to 150 parts by weight, the amount of the fluorine-free non-crosslinkable monomer (c) may be 1000 parts by weight or less, for example, from 0.1 to 300 parts by weight, especially from 1 to 200 parts by weight, the amount of the fluorine-free crosslinkable monomer (d) may be 50 parts by weight or less, for example, 30 parts by weight or less, especially from 0.1 to 20 parts by weight, based on 100 parts by weight of the fluorine-containing monomer (a).

When the same type of the monomers (for example, the halogenated olefin monomer and the fluorine-containing monomer) are contained in both of the first monomer and the second monomer, a weight ratio of the same type monomer (especially halogenated olefin monomer) in the first monomer to the same type monomer (especially, halogenated olefin monomer) in the second monomer may be 3-97:97-3, for example, 5-90:95-10, especially 10-70:90-30.

The fluorine-containing polymer of the present invention can be produced by any of conventional polymerization methods and the polymerization condition can be optionally selected. The polymerization method includes, for example, a solution polymerization, a suspension polymerization and an emulsion polymerization.

In a solution polymerization, there can be used a method of dissolving the monomer(s) into an organic solvent in the presence of a polymerization initiator, replacing the atmosphere by nitrogen, and stirring the mixture with heating at the temperature within the range from 30°C to 120°C for 1 hour to 10 hours. Examples of the polymerization initiator include azobisisobutyronitrile, benzoyl peroxide, di-tert-butyl peroxide, lauryl peroxide, cumene hydroperoxide, t-butyl peroxypivalate and diisopropyl peroxydicarbonate. The polymerization initiator may be used in the amount within the range from 0.01 to 20 parts by weight, for example, from 0.01 to 10 parts by weight, based on 100 parts by weight of total of the monomers.

The organic solvent is inert to the monomer(s) and dissolves the monomer(s), and examples of the organic solvent include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, ethyl acetate, butyl acetate, 1,1,2,2-tetrachloroethane, 1,1,1-trichloroethane, trichloroethylene, perchloroethylene, tetrachlorodifluoroethane and trichlorotrifluoroethane. The organic solvent may be used in the amount within the range from 50 to 2,000 parts by weight, for example, from 50 to 1,000 parts by weight, based on 100 parts by weight of total of the monomers.

In the emulsion polymerization, there can be used a method of emulsifying monomers in water in the presence of a polymerization initiator and an emulsifying agent, replacing the atmosphere by nitrogen, and polymerizing with stirring, for example, at the temperature within the range from 50°C to 80°C for 1 hour to 10 hours. As the polymerization initiator, for example, water-soluble initiators such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine dihydrochloride, azobisisobutyronitrile, sodium peroxide, potassium persulfate and ammonium persulfate and oil-soluble initiators such as azobisisobutyronitrile, benzoyl peroxide, di-tert-butyl peroxide, lauryl peroxide, cumene hydroperoxide, t-butyl peroxypivalate and diisopropyl peroxydicarbonate can be used. The polymerization initiator may be used in the amount within the range from 0.01 to 10 parts by weight based on 100 parts by weight of the monomers.

In order to obtain a polymer dispersion in water, which is superior in storage stability, it is preferable that the monomers are dispersed in water by using an emulsifying device capable of applying a strong shearing energy (e.g., a high-pressure homogenizer and an ultrasonic homogenizer) and then polymerized with using the oil-soluble polymerization initiator. As the emulsifying agent, various emulsifying agents such as an anionic emulsifying agent, a cationic emulsifying agent and a nonionic emulsifying agent can be used in the amount within the range from 0.5 to 20 parts by weight based on 100 parts by weight of the monomers. The anionic emulsifying agent and/or the cationic emulsifying agent and/or the nonionic emulsifying agent are preferable. When the monomers are not completely compatibilized, a compatibilizing agent capable of sufficiently compatibilizing them (e.g., a water-soluble organic solvent and a low-molecular weight monomer) is preferably added to these monomers. By the addition of the compatibilizing agent, the emulsifiability and polymerizability can be improved.

Examples of the water-soluble organic solvent include acetone, methyl ethyl ketone, ethyl acetate, propylene glycol, dipropylene glycol monomethyl ether, dipropylene glycol, tripropylene glycol and ethanol. The water-soluble organic solvent may be used in the amount within the range from 1 to 50 parts by weight, e.g., from 10 to 40 parts by weight, based on 100 parts by weight of water. Examples of the low-molecular weight monomer are methyl methacrylate, glycidyl methacrylate, 2,2,2-trifluoroethyl methacrylate. The low-molecular weight monomer may be used in the amount within the range from 1 to 50 parts by weight, e.g., from 10 to 40 parts by weight, based on 100 parts by weight of total of monomers.

Generally, a liquid comprising the first monomer is subjected to a polymerization reaction to produce the first polymer, and then, a liquid comprising the first polymer and the second monomer is subjected to a polymer reaction to produce the second polymer, whereby the fluorine-containing polymer comprising the first polymer and the second polymer is obtained. The polymerization of the second polymer may be initiated during the polymerization of the first polymer, or the polymerization of the second polymer may be initiated after the completion of the polymerization of the first polymer. Alternatively, the polymerization of the second polymer may be initiated, after at least 10% (namely, 10 to 100%), for example, at least 40% (namely, 40 to 100%), especially at least 70% (namely, 70 to 100%) of the polymerization reaction of the first polymer (namely, the polymerization reaction of the first monomer) is conducted. The conduct rate (%) of the polymerization reaction (namely, a polymerization reaction progress rate %) means mol % of a reacted monomer (that is, a monomer which has been polymerized). For example, when the polymerization reaction is completed at 10%, a polymerized monomer is 10 mol % and an unreacted (unpolymerized) monomer is 90 mol %. When the first monomer is a combination of at least two types of monomers, mol % of the first monomer is based on total mol of at least two types of monomers in the first monomer.

The term "during the polymerization of the first polymer" means that the polymerization reaction of the first polymer (namely, the polymerization reaction of the first monomer) is not completely conducted. For example, after the polymerization of the first polymer is conducted in a range of at least 10% to less than 40%, in a rage of at least 40% to less than 70%, or in a range of at least 70% to less than 100 % (particularly 80%-99%, especially 85%-98%), the polymerization of the second polymer may be initiated.

The term "after the completion of the polymerization" means that the polymerization reaction of the first polymer (namely, the polymerization reaction of the first monomer) is conducted at about 100%.

When the polymerization of the second polymer is initiated during the polymerization of the first polymer, the second polymer has repeat units derived from the first monomer and the second monomer. When the polymerization of a second polymer is initiated after the completion of the polymerization of the first polymer, the second polymer has repeat units derived only from the second monomer.

The charge of the first monomer may be performed by one package (that is, at one time), or may be performed continuously. Preferably, the charge of the first monomer is performed at one time. The charge of the second monomer may be performed by one package, or may be performed continuously. When at least one type of monomer in the second monomer is gaseous, preferably, the continuous charge of the second monomer is performed so that the pressure of monomer gas is constant during the polymerization of the second monomer.

In the fluorine-containing polymer of the present invention, the first polymer is or is not chemically bonded to the second polymer.

Preferably, an unreacted fluorine-free non-crosslinkable monomer is substantially absent in a polymerization system, at the time when the polymerization of the second monomer is initiated. The term "substantially absent" means that the amount of the unreacted fluorine-free non-crosslinkable monomer is at most 10 mol %, preferably at most 6 mol %, particularly at most 2 mol %, especially at most 1 mol %, based on the charged fluorine-free non-crosslinkable monomer, at the time when the polymerization of the second monomer is initiated. The substantial absence of the fluorine-free non-crosslinkable monomer gives the excellent performance which prevents a roll dirt by polymer adhering to a roll, in the processing treatment of the treatment agent comprising the fluorine-containing polymer..

Preferably, the fluorine-containing polymer of the present invention is manufactured by emulsification polymerization. In the particles of the aqueous dispersion formed from the first polymer and the second polymer, the second polymer may surround around the first polymer, and/or the fluorine-containing polymer may have the core/shell structure wherein the core of the first polymer is surrounded by the shell of the second polymer.

The fluorine-containing polymer can be applied to fibrous substrates (such as textiles) by any known method to treat textiles in liquid. The concentration of the fluorine-containing polymer in the solution applied to the textiles may be within the range from 0.5 to 20% by weight or from 1 to 5% by weight. When the textile is a cloth, the cloth may be immersed in the solution or the solution may be adhered or sprayed to the cloth. The treated textiles are dried, preferably heated at a temperature between 100°C and 200°C in order to develop the oil repellency.

Alternatively, the fluorine-containing polymer can be applied to a textile via a cleaning process, such as in a laundry application or dry cleaning process.

The textile which is treated is typically a fabric, including woven, knitted and nonwoven fabrics, fabrics in garment form and carpet, but may also be a fibre or yarn or intermediate textile product such as a sliver or roving. The textile material can be a natural fibre such as cotton or wool, a manmade fibre such as viscose rayon or lyocell or a synthetic fibre such as polyester, polyamide or acrylic fibre, or can be a mixture of fibres such as a mixture of natural and synthetic fibres. The polymeric product of the invention is particularly effective in rendering cellulosic fibres such as cotton or rayon oleophobic and oil repellent. The method of the invention generally also renders the textile hydrophobic and water repellent.

The fibrous substrate can alternatively be leather. The polymeric product can be applied to leather from aqueous solution or emulsion at various stages of leather processing, for example during leather wet end processing or during leather finishing, to render the leather hydrophobic and oleophobic.

The fibrous substrate can alternatively be paper. The polymeric product can be applied to preformed paper or at various stages of papermaking, for example during drying of the paper.

The surface treatment agent of the present invention is preferably in the form of a solution, an emulsion or an aerosol. The surface treatment agent generally comprises the fluorine-containing polymer (active ingredient of the surface treatment agent) and a medium (particularly a liquid medium, for example, an organic solvent and/or water). The concentration of the fluorine-containing polymer in the surface treatment agent may be, for example, from 0.1 to 50 % by weight.

The surface treatment agent of the present invention preferably comprises a fluorine-containing polymer and an aqueous medium. As used herein, the term "aqueous medium" means a medium consisting of water alone, as well as a medium comprising, in addition to water, an organic solvent (the amount of the organic solvent is at most 80 parts by weight, for example, 0.1 to 50 parts by weight, particularly 5 to 30 parts by weight based on 100 parts by weight of water). The fluorine-containing polymer is preferably produced by preparing a dispersion of the fluorine-containing polymer by the emulsion polymerization. The surface treatment agent of the present invention preferably comprises an aqueous dispersion of the particles of a fluorine-containing polymer in an aqueous medium. The particles of the fluorine-containing polymer in the dispersion preferably have an average particle size of from 0.01 to 200 micrometer, for example from 0.1 to 5 micrometer, particularly from 0.05 to 0.2 micrometer. The average particle size may be measured by a dynamic light-scattering device, electron microscope, etc.

The surface treatment agent can be applied to a substrate to be treated by a know procedure. The application of the surface treatment agent can be conducted by immersion, spraying and coating. Usually, the surface treatment agent is diluted with an organic solvent or water, is adhered to surfaces of the substrate by a well-known procedure such as an immersion coating, a spray coating and a foam coating, and is dried. If necessary, the treatment liquid is applied together with a suitable crosslinking agent, followed by curing. It is also possible to add mothproofing agents, softeners, antimicrobial agents, flame retardants, antistatic agents, paint fixing agents, crease-proofing agents, etc. to the surface treatment agent. The concentration of the fluorine-containing compound in the treatment liquid contacted with the substrate may be from 0.01 to 10% by weight (particularly for immersion coating), for example, from 0.05 to 10% by weight (particularly for spray coating), based on the treatment liquid.

The substrate to be treated with the surface treatment agent (for example, a water- and oil-repellent agent) of the present invention is preferably a textile. The textile includes various examples. Examples of the textile include animal- or vegetable-origin natural fibers such as cotton, hemp, wool and silk; synthetic fibers such as polyamide, polyester, polyvinyl alcohol, polyacrylonitrile, polyvinyl chloride and polypropylene; semisynthetic fibers such as rayon and acetate; inorganic fibers such as glass fiber, carbon fiber and asbestos fiber; and a mixture of these fibers.

The textile may be in any form such as a fiber, a yarn and a fabric.

The term "treatment" means that the treatment agent is applied to the substrate by immersion, spray, coating or the like. The fluorine-containing polymer which is an active component of the treatment agent can penetrate the internal of the substrate or can adhere on the surface of the substrate by the treatment.

### EXAMPLES

The present invention is now described in detail by way of Examples, Comparative Examples and Test Examples. However, the present invention is not limited to these Examples.

In the following Examples, parts and % are parts by weight and % by weight, unless otherwise specified.

The procedures of the tests were performed in the following manner.

### Shower water repellency test

Shower water repellency test was conducted according to JIS-L-1092. The shower water repellency was expressed by water repellency No. (as shown in the below-described Table 1).

A glass funnel which has a volume of at least 250 ml and a spray nozzle which can spray 250 ml of water for 20-30 seconds are used. A test piece flame is a metal flame having a diameter of 15cm. Three sheets of a test piece having a size of about 20cm x 20cm are prepared and the sheet is mounted on a test piece holding flame so that the sheet has no wrinkle. The center of the spray was located on the center of the sheet. Room temperature water (250 mL) is charged into the glass funnel and sprayed on the test piece sheet (for time of 25-30 seconds). The holding flame is removed from a stand, one edge of the holding flame is grasped so that a front surface is downside and the other edge is lightly hit with a stiff substance. The holding flame is further rotated 180° and the same procedure is repeated to drop excess water droplets. The wet test piece is compared with a wet comparison standard to grade 0, 50, 70, 80, 90 and 100 points in order of poor water-repellency to excellent water repellency. The results are obtained from an average of three measurements.

### Oil-repellency test

A treated fabric is stored in a thermo-hygrostat having a temperature of 21°C and a humidity of 65% for at least 4 hours. A test liquid (shown in Table 2) which has been also stored at 21°C is used. The test is conducted in an air-conditioned room having a temperature of 21°C and a humidity of 65%. Droplets of the test liquid having an amount of 0.05 mL are softly dropped by a micropipette on the fabric. If droplets remain on the fabric after standing for 30 seconds, the test liquid passes the test. The oil-repellency is expressed by a maximum point of the test liquid which passes the test. The oil-repellency is evaluated as nine levels which are Fail, 1, 2, 3, 4, 5, 6, 7 and 8 in order of a bad level to an excellent level.

**Table 2 Oil-repellency test liquid**

| Point | Test liquid | Surface tension (dyne/cm, 25°C) |
|---|---|---|
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | Mixture liquid of n-Hexadecane 35/nujol 65 | 29.6 |
| 1 | Nujol | 31.2 |
| Fail | Inferior to 1 | - |

### Washing Durability of water- and oil-repellency

Washing is conducted repeatedly ten times or twenty times according to JIS L-0217-103 method, and then water- and oil-repellency is evaluated (HL10 or HL20).

### Hydraulic pressure resistance test

According a hydraulic pressure resistance test method of AATCC 127-2003, a hydraulic pressure resistance measuring device was used to measure a hydraulic pressure resistance.

### Tackiness test

After weighing 1g of solids in the aluminum cup and performing heating for 60°C for 1 hour, tackiness when a finger was applied to a polymer portion and pulled apart was evaluated as follows:
- Good:: Tackiness is not felt at all.
- Fair:: Small tackiness is felt.
- Bad:: Tackiness is felt.
- Very bad:: Strong tackiness is felt.

### Preparative Example 1

In a 500 mL autoclave, CF₃CF₂-(CF₂CF₂)ₙ-CH₂CH₂OCOC(CH₃)=CH₂ (n=2.0) (13FMA) (45 g), stearyl acrylate (StA) (11 g), pure water (150 g), dipropyleneglycol monomethyl ether (24 g), polyoxyethylene oleyl ether (7.5 g) and polyoxyethylene isotridecyl ether (2.0 g) were charged and then emulsified and dispersed with supersonic wave while stirred at a temperature of 60°C for 15 minutes. After the atmosphere in the autoclave was replaced with nitrogen, and 2,2-azobis-(2-amidinopropane) dihydrochloride (0.6 g) was added to conduct a reaction at 60°C for 40 minutes (Polymerization reaction conduct; 13FMA: 91%, StA: 90%), vinyl chloride (VCM) (20 g) was charged by injection. Further, 2,2-azobis-(2-amidinopropane) dihydrochloride (0.6 g) was added and a reaction was conducted at 60°C for 5 hours to obtain an aqueous dispersion of a polymer.

A charge composition (weight ratio) of the monomers was as shown in Table A. The monomer composition in the polymer was almost the same as the composition of the charged monomer.

### Preparative Example 2

In a 1 L autoclave, CF₃CF₂-(CF₂CF₂)ₙ-CH₂CH₂OCOC(CH₃=CH₂ (n=2.0) (13FMA) (45 g), stearyl acrylate (StA) (160 g), pure water (400 g), dipropyleneglycol monomethyl ether (82 g), polyoxyethylene oleyl ether (5.4 g) and polyoxyethylene isotridecyl ether (5.4 g) were charged and then emulsified and dispersed with supersonic wave while stirred at a temperature of 60°C for 15 minutes. After the atmosphere in the autoclave was replaced with nitrogen, and 2,2-azobis-(2-amidinopropane) dihydrochloride (0.2 g) was added to conduct a reaction at 60°C for 40 minutes (Polymerization reaction conduct; 13FMA: 85%, StA: 94%), vinyl chloride (VCM) (46 g) was charged by injection. Further, 2,2-azobis-(2-amidinopropane) dihydrochloride (0.2 g) was added and a reaction was conducted at 60°C for 5 hours to obtain an aqueous dispersion of a polymer.

A charge composition (weight ratio) of the monomers was as shown in Table A. The monomer composition in the polymer was almost the same as the composition of the charged monomer.

### Preparative Example 3

In a 1 L autoclave, CF₃CF₂-(CF₂CF₂)ₙ-CH₂CH₂OCOC(CH₃)=CH₂ (n=2.0) (13FMA) (45 g), stearyl acrylate (StA) (160 g), pure water (400 g), dipropyleneglycol monomethyl ether (82 g), polyoxyethylene oleyl ether (5.4 g) and polyoxyethylene isotridecyl ether (5.4 g) were charged and then emulsified and dispersed with supersonic wave while stirred at a temperature of 60°C for 15 minutes. After the atmosphere in the autoclave was replaced with nitrogen, and 2,2-azobis-(2-amidinopropane) dihydrochloride (0.6 g) was added to conduct a reaction at 60°C for 40 minutes (Polymerization reaction conduct; about 100%), vinyl chloride (VCM) (46 g) was charged by injection. Further, 2,2-azobis-(2-amidinopropane) dihydrochloride (0.6 g) was added and a reaction was conducted at 60°C for 5 hours to obtain an aqueous dispersion of a polymer.

A charge composition (weight ratio) of the monomers was as shown in Table A. The monomer composition in the polymer was almost the same as the composition of the charged monomer.

### Preparative Example 4

In a 1 L autoclave, CF₃CF₂-(CF₂CF₂)ₙ-CH₂CH₂OCOC(CH₃)=CH₂ (n=2.0) (13FMA) (45 g), stearyl acrylate (StA) (160 g), pure water (400 g), dipropyleneglycol monomethyl ether (82 g), polyoxyethylene oleyl ether (5.4 g) and polyoxyethylene isotridecyl ether (5.4 g) were charged and then emulsified and dispersed with supersonic wave while stirred at a temperature of 60°C for 15 minutes. After the atmosphere in the autoclave was replaced with nitrogen, and 2,2-azobis-(2-amidinopropane) dihydrochloride (0.2 g) was added to conduct a reaction at 60°C for 40 minutes (Polymerization reaction conduct; 13FMA: 85%, StA: 94%), vinyl chloride (VCM) (46 g) and diacetone acrylamide (DAAM) (5 g) were charged by injection. Further, 2,2-azobis-(2-amidinopropane) dihydrochloride (0.2 g) was added and a reaction was conducted at 60°C for 5 hours to obtain an aqueous dispersion of a polymer.

A charge composition (weight ratio) of the monomers was as shown in Table A. The monomer composition in the polymer was almost the same as the composition of the charged monomer.

### Preparative Example 5

In a 1 L autoclave, stearyl acrylate (StA) (160 g), pure water (400 g), dipropyleneglycol monomethyl ether (82 g), polyoxyethylene oleyl ether (5.4 g) and polyoxyethylene isotridecyl ether (5.4 g) were charged and then emulsified and dispersed with supersonic wave while stirred at a temperature of 60°C for 15 minutes. After the atmosphere in the autoclave was replaced with nitrogen, and 2,2-azobis-(2-amidinopropane) dihydrochloride (0.2 g) was added to conduct a reaction at 60°C for 3 hours (Polymerization reaction conduct; about 100%), vinyl chloride (VCM) (46 g) and CF₃CF₂-(CF₂CF₂)ₙ-CH₂CH₂OCOC(CH₃)=CH₂ (n=2.0) (13FMA) (45 g) were charged by injection. Further, 2,2-azobis-(2-amidinopropane) dihydrochloride (0.2 g) was added and a reaction was conducted at 60°C for 5 hours to obtain an aqueous dispersion of a polymer.

A charge composition (weight ratio) of the monomers was as shown in Table A. The monomer composition in the polymer was almost the same as the composition of the charged monomer.

### Preparative Example 6

In a 500 mL autoclave, CF₃CF₂- (CF₂CF₂)ₙ-CH₂CH₂OCOC(Cl)=CH₂ (n=2.0) (13FCLA) (45 g), stearyl acrylate (StA) (11 g), pure water (150 g), dipropyleneglycol monomethyl ether (24 g), polyoxyethylene oleyl ether (7.5 g) and polyoxyethylene isotridecyl ether (2.0 g) were charged and then emulsified and dispersed with supersonic wave while stirred at a temperature of 60°C for 15 minutes. After the atmosphere in the autoclave was replaced with nitrogen, and 2,2-azobis-(2-amidinopropane) dihydrochloride (0.6 g) was added to conduct a reaction at 60°C for 40 minutes (Polymerization reaction conduct; 13FCLA: 78%, StA: 90%), vinyl chloride (VCM) (20 g) was charged by injection. Further, 2,2-azobis-(2-amidinopropane) dihydrochloride (0.6 g) was added and a reaction was conducted at 60°C for 5 hours to obtain an aqueous dispersion of a polymer.

A charge composition (weight ratio) of the monomers was as shown in Table A. The monomer composition in the polymer was almost the same as the composition of the charged monomer.

### Preparative Example 7

In a 1 L autoclave, CF₃CF₂-(CF₂CF₂)ₙ-CH₂CH₂OCOC(Cl)=CH₂ (n=2.0) (13FCLA) (45 g), stearyl acrylate (StA) (160 g), pure water (400 g), dipropyleneglycol monomethyl ether (82 g), polyoxyethylene oleyl ether (5.4 g) and polyoxyethylene isotridecyl ether (5.4 g) were charged and then emulsified and dispersed with supersonic wave while stirred at a temperature of 60°C for 15 minutes. After the atmosphere in the autoclave was replaced with nitrogen, and 2,2-azobis-(2-amidinopropane) dihydrochloride (0.2 g) was added to conduct a reaction at 60°C for 40 minutes (Polymerization reaction conduct; 13FCLA: 77%, StA: 94%), vinyl chloride (VCM) (46 g) was charged by injection. Further, 2,2-azobis-(2-amidinopropane) dihydrochloride (0.2 g) was added and a reaction was conducted at 60°C for 5 hours to obtain an aqueous dispersion of a polymer.

A charge composition (weight ratio) of the monomers was as shown in Table A. The monomer composition in the polymer was almost the same as the composition of the charged monomer.

### Comparative Preparative Example 1

In a 500 mL autoclave, CF₃CF₂-(CF₂CF₂)ₙ-CH₂CH₂OCOC(CH₃)=CH₂ (n=2.0) (13FMA) (45 g), stearyl acrylate (StA) (11 g), pure water (150 g), dipropyleneglycol monomethyl ether (24 g), polyoxyethylene oleyl ether (7.5 g) and polyoxyethylene isotridecyl ether (2.0 g) were charged and then emulsified and dispersed with supersonic wave while stirred at a temperature of 60°C for 15 minutes. After the atmosphere in the autoclave was replaced with nitrogen, vinyl chloride (VCM) (20 g) was charged by injection and 2,2-azobis-(2-amidinopropane) dihydrochloride (0.4 g) was added to conduct a reaction at 60°C for 5 hours, whereby an aqueous dispersion of a polymer was obtained.

A charge composition (weight ratio) of the monomers was as shown in Table A. The monomer composition in the polymer was almost the same as the composition of the charged monomer.

### Comparative Preparative Example 2

In a 1 L autoclave, CF₃CF₂-(CF₂CF₂)ₙ-CH₂CH₂OCOC(CH₃)=CH₂ (n=2.0) (13FMA) (45 g), stearyl acrylate (StA) (160 g), pure water (400 g), dipropyleneglycol monomethyl ether (82 g), polyoxyethylene oleyl ether (5.4 g) and polyoxyethylene isotridecyl ether (5.4 g) were charged and then emulsified and dispersed with supersonic wave while stirred at a temperature of 60°C for 15 minutes. After the atmosphere in the autoclave was replaced with nitrogen, vinyl chloride (VCM) (46 g) was charged by injection and 2,2-azobis-(2-amidinopropane) dihydrochloride (0.6 g) was added to conduct a reaction at 60°C for 5 hours, whereby an aqueous dispersion of a polymer was obtained.

A charge composition (weight ratio) of the monomers was as shown in Table A. The monomer composition in the polymer was almost the same as the composition of the charged monomer.

### Comparative Preparative Example 3

In a 1 L autoclave, CF₃CF₂-(CF₂CF₂)ₙ-CH₂CH₂OCOC (CH₃) =CH₂ (n=2.0) (13FMA) (45 g), stearyl acrylate (StA) (160 g), pure water (400 g), dipropyleneglycol monomethyl ether (82 g), polyoxyethylene oleyl ether (5.4 g) and polyoxyethylene isotridecyl ether (5.4 g) were charged and then emulsified and dispersed with supersonic wave while stirred at a temperature of 60°C for 15 minutes. After the atmosphere in the autoclave was replaced with nitrogen, 2,2-azobis-(2-amidinopropane) dihydrochloride (0.6 g) was added to conduct a reaction at 60°C for 5 hours, whereby an aqueous dispersion of a first polymer was obtained. In a 1 L autoclave, after the atmosphere replacement with nitrogen, pure water (400 g), dipropyleneglycol monomethyl ether (82 g), polyoxyethylene oleyl ether (5.4 g) and polyoxyethylene isotridecyl ether (5.4 g) were charged, vinyl chloride (VCM) (46 g) was charged by injection, and 2,2-azobis-(2-amidinopropane) dihydrochloride (0.6 g) was added to conduct a reaction at 60°C for 5 hours, whereby an aqueous dispersion of a second polymer was obtained. The aqueous dispersion of the first polymer and the aqueous dispersion of the second polymer were mixed in a weight ratio of 20/80 to obtain an aqueous dispersion.

A charge composition (weight ratio) of the monomers was as shown in Table A. The monomer composition in the polymer was almost the same as the composition of the charged monomer.

### Comparative Preparative Example 4

In a 500 mL autoclave, CF₃CF₂- (CF₂CF₂)ₙ-CH₂CH₂OCOC(CH₃)=CH₂ (n=2.0) (13FMA) (40 g), stearyl acrylate (StA) (9 g), pure water (150 g), dipropyleneglycol monomethyl ether (24 g), polyoxyethylene oleyl ether (7.5 g) and polyoxyethylene isotridecyl ether (2.0 g) were charged and then emulsified and dispersed with supersonic wave while stirred at a temperature of 60°C for 15 minutes. After the atmosphere in the autoclave was replaced with nitrogen, vinyl chloride (VCM) (20 g) was charged by injection and 2,2-azobis-(2-amidinopropane) dihydrochloride (0.6 g) was added to conduct a reaction at 60°C for 40 minutes (Polymerization reaction conduct; 13FMA: 85%, StA: 91%, VCM: 11%). Then CF₃CF₂-(CF₂CF₂)ₙ-CH₂CH₂OCOC(CH₃)=CH₂ (n=2.0) (13FMA) (5 g) and stearyl acrylate (StA) (2 g) were added and further 2,2-azobis-(2-amidinopropane) dihydrochloride (0.6 g) was added to conduct a reaction at 60°C for 5 hour, whereby an aqueous dispersion of a polymer was obtained.

A charge composition (weight ratio) of the monomers was as shown in Table A. The monomer composition in the polymer was almost the same as the composition of the charged monomer.

### Comparative Preparative Example 5

In a 500 mL autoclave, CF₃CF₂-(CF₂CF₂)ₙ-CH₂CH₂OCOC(CH₃)=CH₂ (n=2.0) (13FMA) (45 g), pure water (400 g), dipropyleneglycol monomethyl ether (82 g), polyoxyethylene oleyl ether (5.4 g) and polyoxyethylene isotridecyl ether (5.4 g) were charged and then emulsified and dispersed with supersonic wave while stirred at a temperature of 60°C for 15 minutes. After the atmosphere in the autoclave was replaced with nitrogen, 2,2-azobis-(2-amidinopropane) dihydrochloride (0.6 g) was added to conduct a reaction at 60°C for 40 minutes (Polymerization reaction conduct: 82%). Then vinyl chloride (VCM) (46 g) and stearyl acrylate (StA) (160 g) were charged by injection and further 2,2-azobis-(2-amidinopropane) dihydrochloride (0.2 g) was added to conduct a reaction at 60°C for 5 hour, whereby an aqueous dispersion of a polymer was obtained.

A charge composition (weight ratio) of the monomers was as shown in Table A. The monomer composition in the polymer was almost the same as the composition of the charged monomer.

### Example 1

Each of aqueous liquids (each of 5 g, 7.5 g and 48 g) obtained in Preparative Example 1 was diluted with pure water to prepare a test solution (1000 g). A nylon taffeta cloth (510 mm x 205 mm) was immersed into the test solution, passed through a mangle and treated with a pin tenter at 160°C for 2 minutes. The test cloth was subjected to a water repellency test. The above procedure was repeated for a PET taffeta cloth (510 mm x 205 mm). Each of the test cloths was divided into a non-washing cloth (HL0), a ten-wash cloth (HL10), and a 20-wash cloth (HL20), and each cloth was used for the shower water-repellency test, the water repellency test, and the oil-repellency test. The results are shown in Table A.

### Examples 2-7 and Comparative Examples 1-5

The polymer produced in each of Preparative Examples 2-7 and Comparative Preparative Examples 1-5 was applied for treatment in the same manner as in Example 1, and the shower water repellency test and oil repellency test were conducted. The results are shown in Table A.

The meanings of the abbreviations in the tables are as follows:

| Abbreviation 1 | Abbreviation 2 | Chemical formula |
|---|---|---|
| F | 13FMA | C₆F₁₃CH₂CH₂OCOC(CH₃)=CH₂ |
| FC | 13FClA | CF₃CF₂-(CF₂CF₂)ₙ-CH₂CH₂OCOC(Cl)=CH₂ |
| S | StA | C₁₈H₃₇OCOCH=CH₂ |
| V | VCM | CH₂CHCl |
| A | DAAM | Diacetone acrylamide (Crosslinkable monomer) |

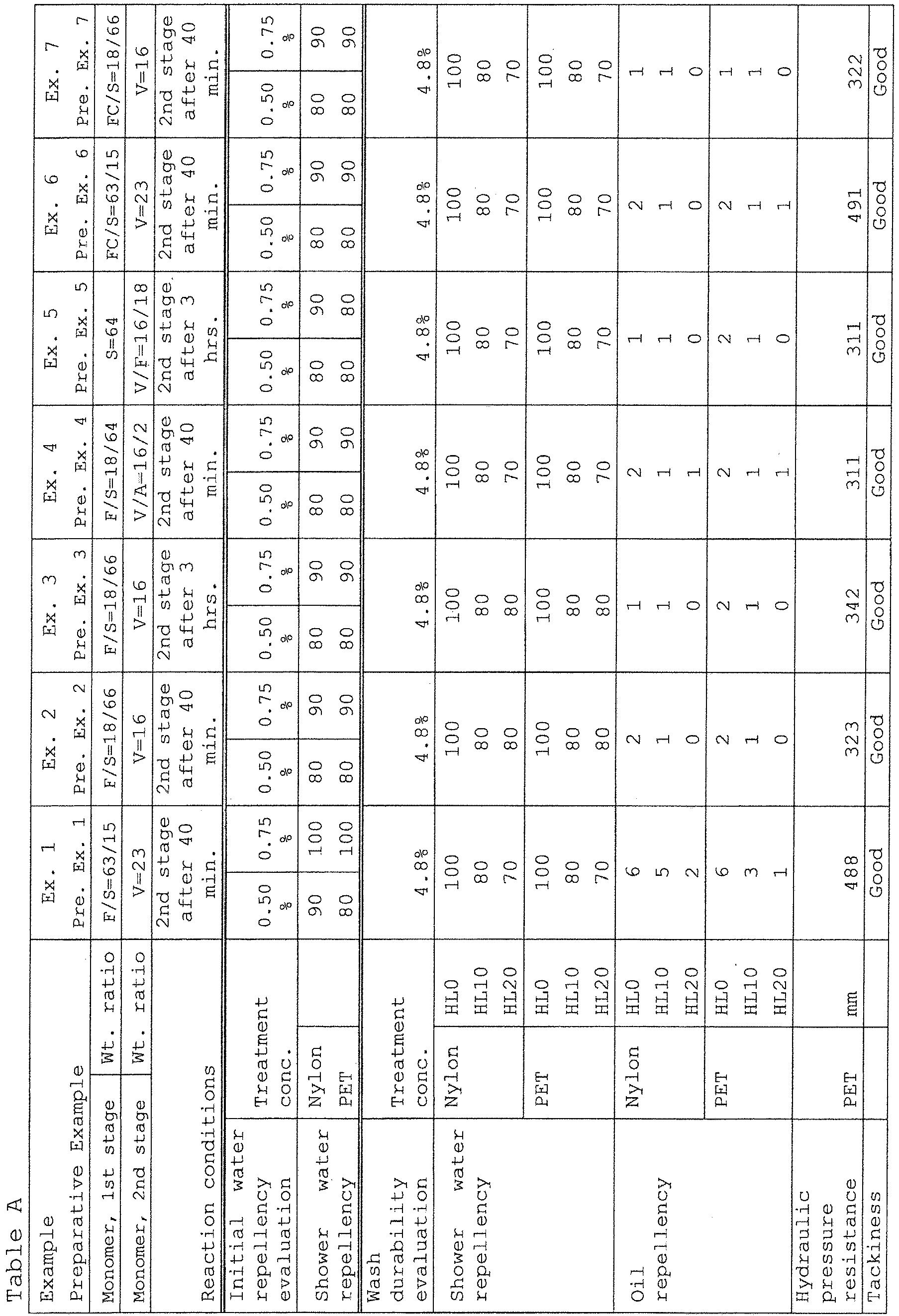

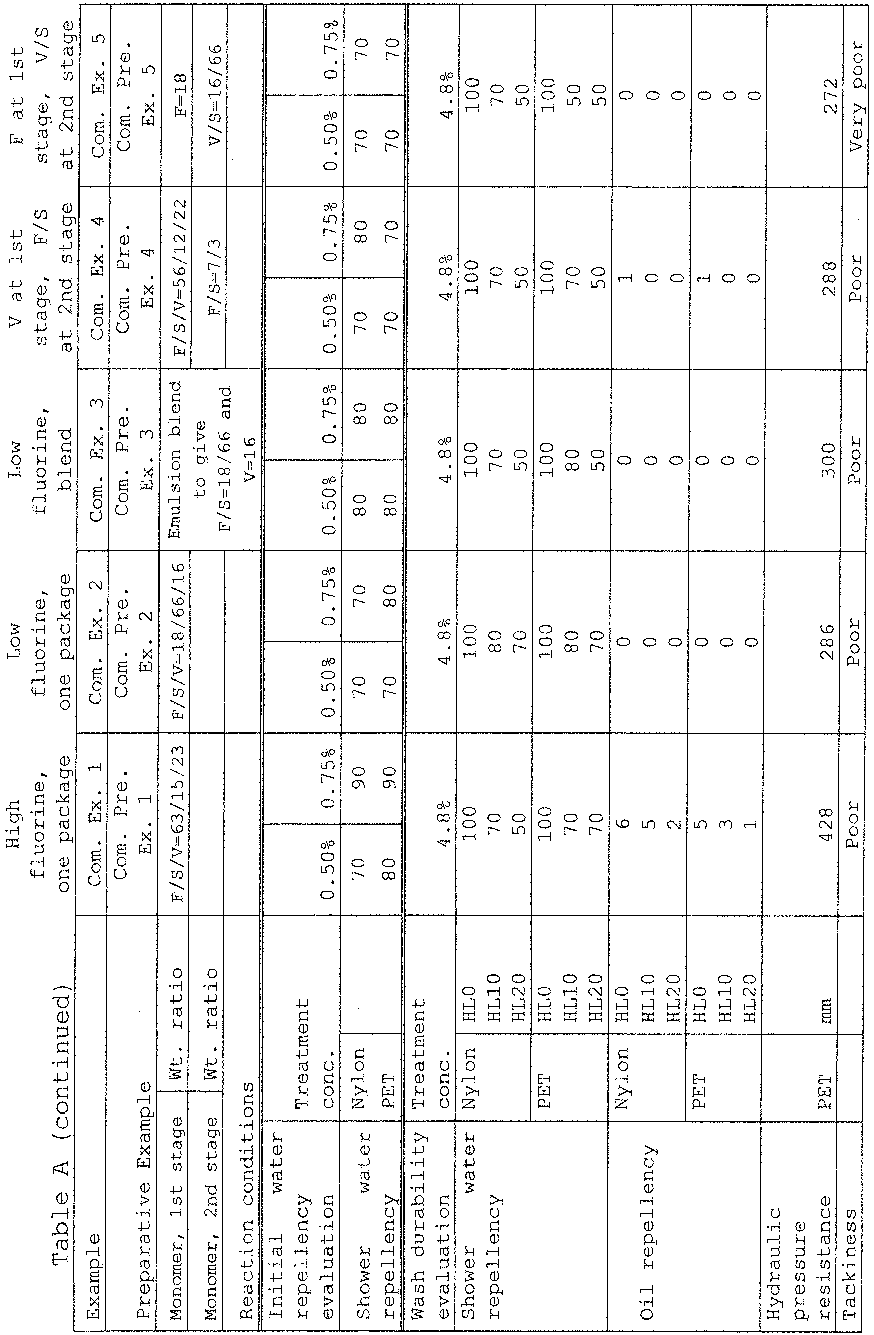

### INDUSTRIAL APPLICABILITY

The treatment composition comprising the fluorine-containing polymer according to the present invention can be used as the water- and oil-repellent agent, the soil resistant agent and the like, which imparts excellent water repellency, oil repellency and soil resistance to a textile (for example, a carpet), a paper, a non-woven fabric, masonry, an electrostatic filter, a dust protective mask, and a part of fuel cell.

## Claims

1. A fluorine-containing polymer comprising a first polymer formed from a first monomer, and a second polymer formed from a second monomer,
wherein the second monomer is polymerized in the presence of the first polymer,
at least one of the first monomer and the second monomer comprises a fluorine-containing monomer (a), and
the second monomer comprises a halogenated olefin monomer (b).

2. The fluorine-containing polymer according to claim 1, wherein the first monomer comprises the fluorine-containing monomer (a).

3. The fluorine-containing polymer according to claim 1 or 2, wherein the second monomer comprises the fluorine-containing monomer (a).

4. The fluorine-containing polymer according to any one of claims 1 to 3, wherein the second monomer does not contain a fluorine-free non-crosslinkable monomer (c).

5. The fluorine-containing polymer according to any one of claims 1 to 4, wherein the first monomer comprises a fluorine-free non-crosslinkable monomer (c).

6. The fluorine-containing polymer according to any one of claims 1 to 5, wherein the second monomer comprises a fluorine-free crosslinkable monomer (d).

7. The fluorine-containing polymer according to any one of claims 1 to 6, wherein the first polymer further comprises the fluorine-free non-crosslinkable monomer (c) and, optionally present, the fluorine-free crosslinkable monomer (d), in addition to the fluorine-containing monomer (a).

8. The fluorine-containing polymer according to any one of claims 1 to 7, wherein the second polymer is formed from only the halogenated olefin monomer.

9. The fluorine-containing polymer according to any one of claims 1 to 8, wherein the second polymer comprises at least one of the fluorine-containing monomer (a) and the fluorine-free crosslinkable monomer (d), in addition to the halogenated olefin monomer.

10. The fluorine-containing polymer according to any one of claims 1 to 9, wherein the fluorine-containing monomer (a) is represented by the formula:
CH₂=C(-X)-C(=O)-Y-Z-Rf
wherein
X is a hydrogen atom, a monovalent organic group or a halogen atom;
Y is -O- or -NH-;
Z is a direct bond or divalent organic group;
Rf is a fluoroalkyl group having 1 to 20 carbon atoms.

11. The fluorine-containing polymer according to any one of claims 1 to 10, wherein the fluorine-containing monomer (a) is represented by the formula:
CH₂=C(-X)-C(=O)-Y-Z-Rf (1)
wherein
X is a hydrogen atom, a linear or branched alkyl group having 1 to 21 carbon atoms, a fluorine atom, a chlorine atom, a bromine atom, an iodine atom, a CFX¹X² group (where each of X¹ and X² is a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group or a substituted or unsubstituted phenyl group;
Y is -0- or -NH- group;
Z is an aliphatic group having 1 to 10 carbon atoms, an aromatic or cycloaliphatic group having 6 to 18 carbon atoms, a -CH₂CH₂N(R¹)SO₂- group (wherein R¹ is an alkyl group having 1 to 4 carbon atoms), a -CH₂CH(OZ¹) CH₂- group (wherein Z¹ is a hydrogen atom or an acetyl group), a -(CH₂)ₘ-SO₂-(CH₂)ₙ-group or a -(CH₂)ₘ-S-(CH₂)ₙ- group (wherein m is 1 to 10 and n is 0 to 10),
Rf is a linear or branched fluoroalkyl group having 1 to 20 carbon atoms.

12. The fluorine-containing polymer according to claim 10 or 11, wherein the carbon number of the fluoroalkyl group in the fluorine-containing monomer is six or less.

13. The fluorine-containing polymer according to any one of claims 1 to 12, wherein the halogenated olefin monomer (b) is an olefin having 2-20 carbon atoms and substituted by a chlorine atoms, a bromine atom or a iodine atom.

14. The fluorine-containing polymer according to any one of claims 1 to 13, wherein the halogenated olefin monomer (b) is vinyl chloride, vinyl bromide, vinyl iodide, vinylidene chloride, vinylidene bromide or vinylidene iodide.

15. The fluorine-containing polymer according to any one of claims 1 to 14, wherein the fluorine-free non-crosslinkable monomer (c) is a monomer, which does not contain a fluorine atom, which does not have a crosslinkable functional group, and which has one carbon-carbon double bond.

16. The fluorine-containing polymer according to any one of claims 1 to 14, wherein the fluorine-free non-crosslinkable monomer (c) is represented by the formula:
CH₂=CA-T
wherein A is a hydrogen atom, a methyl group, or a halogen atom other than a fluorine atom (for example, a chlorine atom, a bromine atom, and an iodine atom),
T is a hydrogen atom, an open-chain or cyclic hydrocarbon group having 1-30 carbon atoms, or an open-chain or cyclic organic group having 1-20 carbon atoms and having an ester bond.

17. The fluorine-containing polymer according to claim 16, wherein T is a long-chain hydrocarbon group having 12-30 carbon atoms, or a saturated cyclic hydrocarbon group, in the fluorine-free non-crosslinkable monomer (c).

18. The fluorine-containing polymer according to any one of claims 1 to 14, wherein the fluorine-free non-crosslinkable monomer (c) is an acrylate represented by the general formula:
CH₂=CA¹COOA²
wherein A¹ is a hydrogen atom, a methyl group, or a halogen atom other than a fluorine atom (for example, a chlorine atom, a bromine atom, and an iodine atom), and
A² is an alkyl group represented by CₙH₂ₙ₊₁ (n= 1-30).

19. The fluorine-containing polymer according to any one of claims 1 to 18, wherein the fluorine-free crosslinkable monomer (d) is a compound which has at least two reactive groups and/or carbon-carbon double bonds, and which does not contain fluoride.

20. The fluorine-containing polymer according to any one of claims 1 to 19, wherein the first monomer does not contain the halogenated olefin monomer (b).

21. A method of producing a fluorine-containing polymer comprising a first polymer formed from a first monomer, and a second polymer formed from a second monomer,
wherein the method comprises the steps of:
(I) polymerizing the first monomer to obtain the first polymer, and
(II) polymerizing the second monomer in the presence of the first polymer to obtain the second polymer,
at least one of the first monomer and the second monomer comprises a fluorine-containing monomer,
the first monomer comprises a fluorine-free non-crosslinkable monomer, and
the second monomer comprises a halogenated olefin monomer.

22. The method according to claim 21, wherein a polymerization of the second polymer is initiated during a polymerization of the first polymer.

23. The method according to claim 21, wherein a polymerization of the second polymer is initiated after completion of a polymerization of the first polymer.

24. The method according to claim 21, wherein the polymerization of the second polymer is initiated after at least 10%, for example, at least 40%, especially at least 70% of the polymerization reaction of the first polymer is conducted.

25. The method according to claim 21, wherein an unreacted fluorine-free non-crosslinkable monomer is substantially absent in a polymerization system, at the time when the polymerization of the second monomer is initiated.

26. A water- and oil-repellent agent which comprises the fluorine-containing polymer according to any one of claims 1 to 20.

27. The water- and oil-repellent agent according to claim 26, which further contains an aqueous medium.

28. The water- and oil-repellent agent according to claim 26, which is aqueous dispersion.

29. A method of treating a substrate, which comprises treating the substrate with the water- and oil-repellent agent according to claim 26.

30. A textile treated with the water- and oil-repellent agent according to claim 26.
